# FASCICULE DE BREVET EUROPEEN

(11) **EP 2 802 485 B1**
(45) Date de publication et mention de la délivrance du brevet: **12.04.2017**
(21) Numéro de dépôt: 13701838.8
(22) Date de dépôt: 08.01.2013
(51) Int. Cl.: B60R 5/04

(54) **DISPOSITIF D'HABILLAGE LATERAL D'UN COFFRE ARRIERE DE VEHICULE**
SEITLICHE VERKLEIDUNGSVORRICHTUNG FÜR DEN GEPÄCKRAUM EINES FAHRZEUGES
VEHICLE REAR LUGGAGE COMPARTMENT LATERAL TRIM DEVICE

(30) Priorité: 13.01.2012 FR 1250331
(43) Date de publication de la demande: 19.11.2014
(73) Titulaire: Peugeot Citroën Automobiles SA, 78140 Vélizy Villacoublay (FR)
(72) Inventeur: DEBUSNE, Charles, F-77126 Chatenay sur Seine (FR); SENECAL, Josselin, F-77176 Savigny Le Temple (FR)
(74) Mandataire: Fosse, Danièle
(86) Numéro de dépôt international: PCT/FR2013/050032
(87) Numéro de publication internationale: WO 2013/104856

(56) Documents cités:
- WO-A1-2010/026741

## Description

L'invention a trait à un dispositif d'habillage latéral d'un coffre arrière de véhicule. L'invention a trait également à un véhicule équipé dudit dispositif d'habillage.

Dans la majorité des véhicules automobiles, la carrosserie intérieure est pourvue d'un habillage au niveau du coffre à bagages. Il s'agit essentiellement d'un élément d'habillage en forme de panneau moulé disposé contre la carrosserie intérieure. Une tablette arrière peut recouvrir le volume du coffre, cette tablette étant fixe ou pivotante. Lorsqu'elle est fixe, elle est habituellement fixée à ses deux extrémités latérales à la carrosserie du véhicule. Lorsqu'elle est pivotante, elle est habituellement montée pivotante sur deux supports de tablette disposés latéralement de part et d'autre de la tablette, ces supports étant fixés à la carrosserie. Les supports peuvent également servir d'appui pour les deux bords latéraux de la tablette. La fixation de l'élément d'habillage est généralement assurée par ses bords avant et arrière qui sont mis en contact avec des bords correspondant de la carrosserie, tels que le bord latéral inférieur de l'ouverture du coffre et le bord arrière de la porte arrière correspondante. Une partie du panneau d'habillage, en particulier, une partie centrale ou une partie correspondant à une moitié arrière peut s'étendre à distance de la carrosserie du véhicule, libre de toute fixation, et ainsi manquer de stabilité. La nature souple du matériau formant le panneau peut renforcer cette instabilité qui peut être perçue comme un défaut de qualité.

Le document de brevet FR 2 887 200 A1 divulgue des supports latéraux de tablette arrière pivotante de véhicule. Ces supports comportent, chacun, un vide poche permettant d'exploiter un espace sinon perdu ou du moins difficilement exploitable. L'ouverture du support donnant accès au vide poche est située directement au-dessus de la tablette arrière, le volume du vide-poche s'étendant vers le bas sous le niveau de la tablette. Le support s'étend longitudinalement essentiellement horizontalement et est fixé directement à des éléments de la carrosserie. Le panneau d'habillage de la carrosserie sous le support est un élément séparé et fixé au véhicule par ses propres moyens de fixation. La fixation du panneau d'habillage n'est pas davantage détaillée.

WO2010/026741 A1 divulgue un dispositif d'habillage de coffre de véhicule conformément au préambule de la revendication 1.

L'invention a pour objectif de proposer une solution simple et économique à la fixation du panneau d'habillage latéral d'un coffre à bagages de véhicule.

L'invention a pour objet un dispositif d'habillage de coffre de véhicule, comprenant: un panneau d'habillage de la carrosserie du véhicule délimitant latéralement le volume du coffre, avec au moins un bord destiné à être fixé à la carrosserie; un support de tablette arrière apte à être fixé essentiellement horizontalement à ladite zone de carrosserie et à épouser le panneau d'habillage; remarquable en ce que le panneau d'habillage comprend des moyens de fixation positionnés à distance dudit bord ou d'au moins un des bords; et le support de tablette arrière comprend des premiers moyens de fixation apte à coopérer avec les moyens de fixation du panneau d'habillage.

Le support de tablette arrière est un élément d'habillage s'étendent selon une direction principale orientée selon l'axe longitudinale du véhicule.

Le panneau d'habillage peut être en matériau moulé, préférentiellement semi-rigide et pourvu d'une couche de finition du type feutrine sur sa face intérieure.

Selon un mode avantageux de l'invention, l'élément de tablette arrière comprend des seconds moyens de fixation à la carrosserie du véhicule qui sont à distance des premiers moyens de fixation coopérant avec ceux du panneau d'habillage.

Selon un encore autre mode avantageux de l'invention, les premiers moyens de fixation de l'élément de tablette arrière sont situés sur une moitié arrière dudit élément.

Selon un encore autre mode avantageux de l'invention, les moyens de fixation du panneau d'habillage sont situés sur une moitié arrière et/ou sur une moitié supérieure dudit panneau.

Selon un encore autre mode avantageux de l'invention, les moyens de fixation du panneau d'habillage comprennent au moins un orifice, le ou au moins un des orifices étant préférentiellement formés dans un renfoncement dudit panneau par rapport à sa face d'habillage.

Selon un encore autre mode avantageux de l'invention, les premiers moyens de fixation de l'élément de tablette arrière comprennent au moins une pièce en saillie, préférentiellement pourvue de moyens de clippage, destinée à coopérer par insertion avec les moyens de fixation de l'élément d'habillage. Les moyens de fixation de l'élément de tablette arrière peuvent comprendre une ou plusieurs languettes.

Selon un encore autre mode avantageux de l'invention, l'élément de tablette arrière est majoritairement en plastique injecté et, préférentiellement, ses premiers moyens de fixation sont d'un seul tenant avec ledit élément.

Selon un encore autre mode avantageux de l'invention, le panneau d'habillage comprend une grille d'aération et/ou une trappe d'accès, disposée sous les moyens de fixation dudit élément.

L'invention a également pour objet un véhicule automobile comprenant : une banquette de sièges arrière; un coffre arrière délimité à l'avant par la banquette et latéralement par la carrosserie latérale du véhicule; un dispositif d'habillage latéral du coffre; remarquable en ce que le dispositif d'habillage est conforme à l'invention.

Les mesures de l'invention présentent l'avantage de permettre une stabilisation ou fixation du panneau à une zone sinon difficile à fixer en raison de l'éloignement d'éléments structurels de la carrosserie. En effet, les parties avant et arrière du panneau ne posent pas de problème de fixation compte tenu de la proximité de, voire du contact direct avec des, portions de tôle de la carrosserie. A l'inverse la partie centrale ou arrière du panneau, en fonction de la taille du coffre et des dimensions du véhicule, est potentiellement sujette à bâillement, en particulier lorsqu'elle est pourvue d'une grille ou trappe d'accès destinée à être manipulée sous l'action d'efforts.

D'autres caractéristiques et avantages de la présente invention seront mieux compris à l'aide de la description et des dessins parmi lesquels :
- la figure 1 illustre est une vue arrière du volume d'un coffre à bagages d'un véhicule, comprenant un dispositif d'habillage conforme à l'invention ;
- la figure 2 est une vue en perspective d'une partie du panneau d'habillage latéral du coffre à bagages de la figure 1 ;
- la figure 3 est une vue en perspective de la partie arrière du support de tablette arrière faisant partie du dispositif d'habillage selon l'invention ;
- la figure 4 est une vue similaire à la figure 3, illustrant, en outre, une partie du panneau d'habillage coopérant avec le support de tablette arrière.

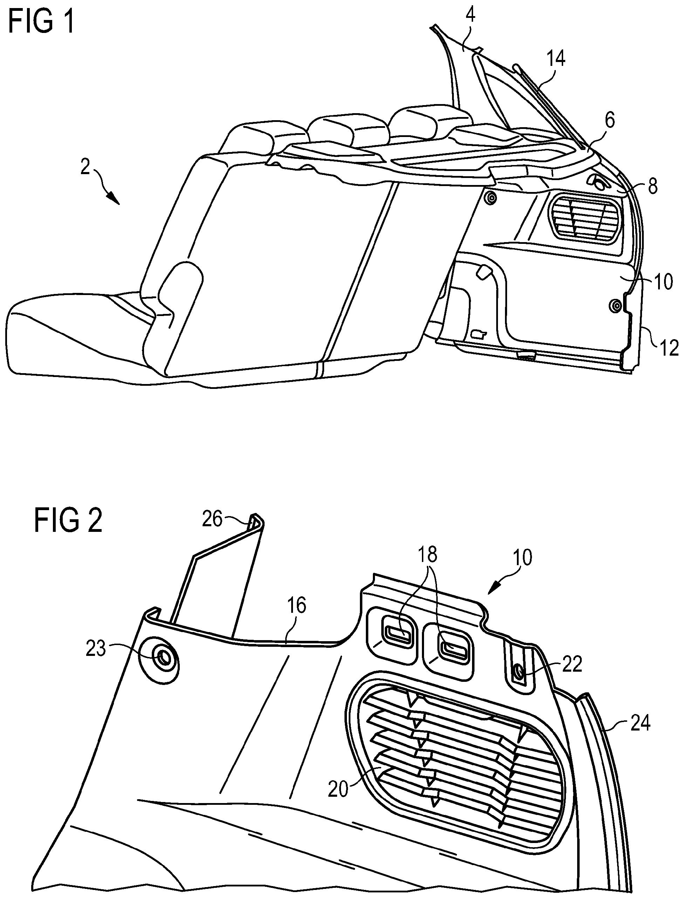

A la figure 1, on peut observer le volume du coffre à bagages du véhicule, ce volume étant délimité à l'avant par le dossier de la banquette de sièges arrière 2, et latéralement par la carrosserie 12 du véhicule. Cette partie 12 de la carrosserie est pourvue d'un panneau d'habillage 10. Ce dernier s'étend depuis un niveau généralement horizontal correspondant au plancher (non illustré) du coffre à bagages vers le haut jusqu'à une tablette arrière 6 délimitant vers le haut le volume du coffre. La tablette arrière 6 est pivotante et en appui sur un support de tablette 8 fixé à la carrosserie du véhicule et vient en contact avec le bord supérieur du panneau 10. Le support est un élément d'habillage avec une fonction structurelle. Comme cela est visible à la figure 1, la custode 14 du véhicule est garnie d'un habillage spécifique 4.

La panneau d'habillage 10 est illustré à la figure 2. On peut constater sa forme complexe destinée à se conformer à la carrosserie du véhicule, en particulier au passage de roue arrière et au support du dossier de la banquette arrière. Le panneau comprend un bord arrière 24 destiné à venir en contact avec un bord correspondant de la carrosserie, au niveau du bord latéral de l'ouverture du couvercle du coffre. Il comprend également un bord avant 26 destiné à venir en contact avec un bord arrière de l'ouverture de porte arrière correspondante. Il comprend un bord supérieur 16 présentant une découpe particulière destinée à se conformer au support de tablette arrière 8. Le panneau 10 comprend à sa partie supérieure deux orifices 18 servant de moyens de fixation aptes à coopérer avec engagement avec des languettes correspondantes du support de tablette arrière. Chacun de ces orifices est situé au centre d'un renfoncement local du panneau, destiné notamment à augmenter la rigidité du panneau. Le panneau comprend également un orifice 22 de fixation à un élément de la carrosserie, cet orifice étant davantage à l'arrière que les deux orifices 18. Le panneau comprend également une grille d'aération 20, en particulier pour l'électronique du réseau de bord du véhicule qui peut être disposé à proximité entre le panneau et la carrosserie.

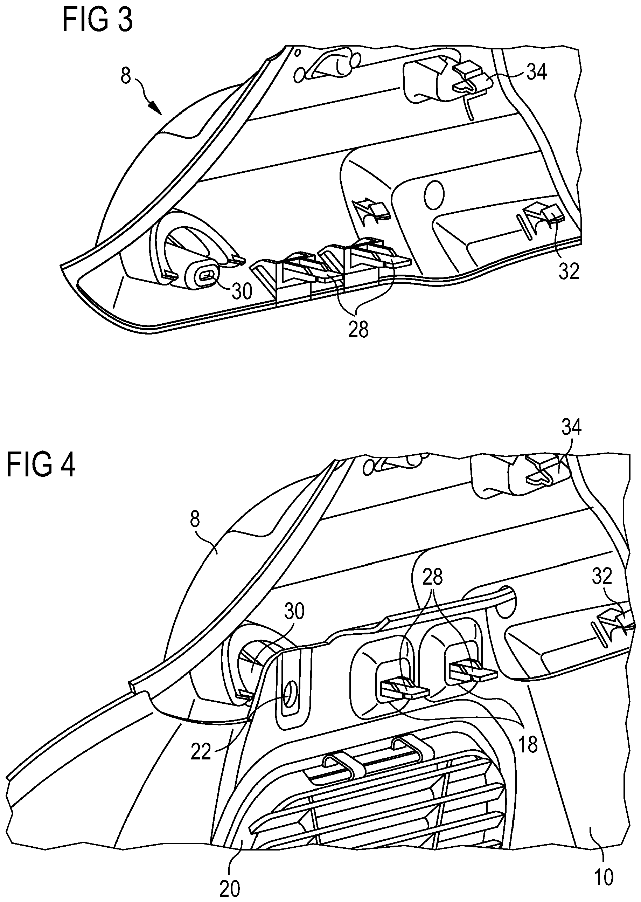

La figure 3 est une vue en perspective de la face de montage du support de tablette arrière 8, plus particulièrement de sa partie arrière. On peut observer que ce support présente une forme de coque moulée s'étendant selon une direction principale orientée selon l'axe longitudinal du véhicule. Il comprend sur sa face de montage divers moyens de fixation à la carrosserie, tels que les languettes 32 et 34, ainsi que le puits de montage 30. Il comprend également deux languettes 28 destinées à coopérer avec les orifices 18 (figure 2) du panneau 10, et ce par insertion dans ces orifices. Ces languettes 28 comportent des nervures s'étendant selon des directions parallèles à la direction principale des languettes. Ces nervures peuvent présenter un profil de hauteur variable avec une zone à contact positif de manière à conférer aux languettes une fonction de clippage avec les orifices.

La figure 4 correspond en partie à la figure 3. Elle illustre, en outre, une partie du panneau 10 mis en correspondance avec le support 8 et fixé à ce dernier. En effet, on peut observer que les languettes 28 coopèrent par engagement avec les orifices correspondants du panneau 10. On peut également observer que le puits de fixation 30 du support 8 est en correspondance avec l'orifice 22. Un moyen de fixation tel qu'une vis peut être mis en oeuvre au travers de ce puits de fixation 30 de manière à coopérer avec un élément fixe de la carrosserie et ainsi fixer le support 8 et, par voie de conséquence, la partie arrière du panneau qui sera alors prise en sandwich entre la carrosserie et le support 8. Il est intéressant de noter que les languettes 28 et les orifices correspondants du panneau 10 sont disposés entre le moyen de fixation arrière, à savoir le puits à vis, et les moyens de fixation avant 32 et 34. Il s'ensuit que la partie intermédiaire du panneau 10, c'est-à-dire celle située entre l'arrière et le milieu est ainsi maintenue en place via le support 8, et ce sans la mise en oeuvre de moyens coopérant directement avec la carrosserie.

On peut également observer à la figure 4 que la grille d'aération 20 du panneau peut être manipulée en ouverture et fermeture. La fixation et stabilisation du panneau 10 assurée par les languettes 28 et les orifices correspondant garantissent une bonne manipulation de la grille d'aération en évitant un bâillement intempestif du panneau notamment lors de l'exercice d'un effort de fermeture et/ou d'ouverture de la grille.

La description de l'invention qui vient d'être faite est également applicable à un dispositif d'habillage de coffre où la tablette arrière est fixe. Dans ce cas, le bord latéral de la tablette alors, similairement au support de tablette arrière pivotante qui a été décrite, assurer la fixation du panneau.

## Revendications

1. Dispositif d'habillage de coffre de véhicule, comprenant :
un panneau d'habillage (10) de la carrosserie du véhicule délimitant latéralement le volume du coffre, avec au moins un bord (24, 26) destiné à être fixé à la carrosserie ;
un support de tablette arrière (8) apte à être fixé essentiellement horizontalement à ladite zone de carrosserie et à épouser le panneau d'habillage (10) ;
**caractérisé en ce que**
le panneau d'habillage (10) comprend des moyens de fixation (18) positionnés à distance dudit bord ou d'au moins un des bords (24, 26) ; et
le support de tablette arrière (8) est un élément d'habillage s'étendant selon une direction principale orientée selon l'axe longitudinale du véhicule et comprend des premiers moyens de fixation (28) aptes à coopérer avec les moyens de fixation (18) du panneau d'habillage (10).

2. Dispositif d'habillage selon la revendication 1, **caractérisé en ce que** le support de tablette arrière (8) comprend des seconds moyens de fixation (30, 32, 34) à la carrosserie du véhicule qui sont à distance des moyens de fixation (28) coopérant avec ceux (18) du panneau d'habillage (10).

3. Dispositif d'habillage selon l'une des revendications 1 et 2, **caractérisé en ce que** le support est un support de tablette arrière pivotante (6) ou une tablette arrière fixe.

4. Dispositif d'habillage selon l'une des revendications 1 à 3, **caractérisé en ce que** les premiers moyens de fixation (28) du support de tablette arrière (8) sont situés sur une moitié arrière dudit support.

5. Dispositif d'habillage selon l'une des revendications 1 à 4, **caractérisé en ce que** les moyens de fixation (18) du panneau d'habillage (10) sont situés sur une moitié arrière et/ou sur une moitié supérieure dudit panneau (10).

6. Dispositif d'habillage selon l'une des revendications 1 à 5, **caractérisé en ce que** les moyens de fixation (18) du panneau d'habillage (10) comprennent au moins un orifice (18), le ou au moins un des orifices étant préférentiellement formés dans un renfoncement dudit panneau (10) par rapport à sa face d'habillage.

7. Dispositif d'habillage selon la revendication 6, **caractérisé en ce que** les premiers moyens de fixation du support de tablette arrière (8) comprennent au moins une pièce en saillie (28), préférentiellement pourvue de moyens de clippage, destinée à coopérer par insertion avec les moyens de fixation (18) de l'élément d'habillage.

8. Dispositif d'habillage selon l'une des revendications 1 à 7, **caractérisé en ce que** le support de tablette arrière (8) est majoritairement en plastique injecté et, préférentiellement, ses premiers moyens de fixation (28) sont d'un seul tenant avec ledit support.

9. Dispositif d'habillage selon l'une des revendications 1 à 8, **caractérisé en ce que** le panneau d'habillage (10) comprend une grille d'aération (20) et/ou une trappe d'accès (20), située sous les moyens de fixation (18) dudit panneau (10).

10. Véhicule automobile comprenant :
une banquette de sièges arrière (2) ;
un coffre arrière délimité à l'avant par la banquette et latéralement par la carrosserie latérale (12) du véhicule ;
un dispositif d'habillage latéral du coffre ;
**caractérisé en ce que**
le dispositif d'habillage est conforme à l'une des revendications 1 à 9.

## Patentansprüche

1. Verkleidungsvorrichtung für Kraftfahrzeuggepäckraum, die Folgendes umfasst:
eine Verkleidungsplatte (10) der Karosserie des Fahrzeugs, die seitlich den Raum des Gepäcksraums abgrenzt, mit mindestens einem Rand (24, 26), der dazu bestimmt ist, an der Karosserie befestigt zu sein,
einen Heckplattenträger (8), der geeignet ist, im Wesentlichen horizontal an der Karosseriezone befestigt zu sein und sich an die Verkleidungsplatte (10) zu schmiegen,
**dadurch gekennzeichnet, dass**
die Verkleidungsplatte (10) Befestigungsmittel (18) umfasst, die von dem Rand oder mindestens einem der Ränder (24, 26) beabstandet positioniert sind, und
wobei der Heckplattenträger (8) ein Verkleidungselement ist, das sich entlang einer Hauptrichtung erstreckt, die entlang der Längsachse des Fahrzeugs ausgerichtet ist und erste Befestigungsmittel (28) umfasst, die geeignet sind, um mit den Befestigungsmitteln (18) der Verkleidungsplatte (10) zusammenzuwirken.

2. Verkleidungsvorrichtung nach Anspruch 1, **dadurch gekennzeichnet, dass** der Heckplattenträger (8) zweite Mittel (30, 32, 34) zum Befestigen an der Karosserie des Fahrzeugs umfasst, die von den Befestigungsmitteln (28), die mit denjenigen (18) der Verkleidungsplatte (10) zusammenwirken, beabstandet sind.

3. Verkleidungsvorrichtung nach einem der Ansprüche 1 und 2, **dadurch gekennzeichnet, dass** der Träger ein Träger (6) für schwenkende Heckplatte oder für eine stationäre Heckplatte ist.

4. Verkleidungsvorrichtung nach einem der Ansprüche 1 bis 3, **dadurch gekennzeichnet, dass** die ersten Befestigungsmittel (28) des Heckplattenträgers (8) auf einer hinteren Hälfte des Trägers liegen.

5. Verkleidungsvorrichtung nach einem der Ansprüche 1 bis 4, **dadurch gekennzeichnet, dass** die Befestigungsmittel (18) der Verkleidungsplatte (10) auf einer hinteren Hälfte und/oder auf einer oberen Hälfte der Platte (10) liegen.

6. Verkleidungsvorrichtung nach einem der Ansprüche 1 bis 5, **dadurch gekennzeichnet, dass** die Befestigungsmittel (18) der Verkleidungsplatte (10) mindestens eine Öffnung (18) umfassen, wobei die Öffnung oder mindestens eine der Öffnungen bevorzugt in einer Verstärkung der Platte (10) im Vergleich zu ihrer Verkleidungsfläche ausgebildet ist.

7. Verkleidungsvorrichtung nach Anspruch 6, **dadurch gekennzeichnet, dass** die ersten Befestigungsmittel des Heckplattenträgers (8) mindestens ein vorstehendes Teil (28) umfassen, das bevorzugt mit Clipsmitteln versehen ist, das dazu bestimmt ist, durch Einfügen mit den Befestigungsmitteln (18) des Verkleidungselements zusammenzuwirken.

8. Verkleidungsvorrichtung nach einem der Ansprüche 1 bis 7, **dadurch gekennzeichnet, dass** der Heckplattenträger (8) in der Hauptsache aus Spritzgusskunststoff besteht, und dass seine ersten Befestigungsmittel (28) bevorzugt aus einem Stück mit dem Träger bestehen.

9. Verkleidungsvorrichtung nach einem der Ansprüche 1 bis 8, **dadurch gekennzeichnet, dass** die Verkleidungsplatte (10) ein Belüftungsgitter (20) und/oder eine Zugangsklappe (20), die sich unter den Befestigungsmitteln (18) der Platte (10) befindet, umfasst.

10. Kraftfahrzeug, das Folgendes umfasst:
eine Rücksitzbank (2),
einen hinteren Kofferraum, der von der Vorderseite durch die Rücksitzbank und seitlich durch die seitliche Karosserie (12) des Fahrzeugs abgegrenzt ist,
eine seitliche Verkleidungsvorrichtung des Kofferraums,
**dadurch gekennzeichnet, dass**
die Verkleidungsvorrichtung einem der Ansprüche 1 bis 9 entspricht.

## Claims

1. A vehicle luggage compartment trim device, comprising:
a trim panel (10) of the body of the vehicle delimiting laterally the volume of the luggage compartment, with at least one edge (24, 26) intended to be fixed to the body;
a rear shelf support (8) able to be fixed substantially horizontally to said area of the body and to closely fit the trim panel (10);
**characterized in that**
the trim panel (10) comprises fixing means (18) positioned at a distance from said edge or from at least one of the edges (24, 26); and
the rear shelf support (8) is a trim element extending along a main direction oriented along the longitudinal axis of the vehicle and comprises first fixing means (28) able to cooperate with the fixing means (18) of the trim panel (10).

2. The trim device according to claim 1, **characterized in that** the rear shelf support (8) comprises second means (30, 32, 34) for fixing to the body of the vehicle, which are at a distance from the fixing means (28) cooperating with those (18) of the trim panel (10).

3. The trim device according to one of claims 1 and 2, **characterized in that** the support is a pivoting rear shelf support (6) or a fixed rear shelf.

4. The trim device according to one of claims 1 to 3, **characterized in that** the first fixing means (28) of the rear shelf support (8) are situated on a rear half of said support.

5. The trim device according to one of claims 1 to 4, **characterized in that** the fixing means (18) of the trim panel (10) are situated on a rear half and/or on an upper half of said panel (10).

6. The trim device according to one of claims 1 to 5, **characterized in that** the fixing means (18) of the trim panel (10) comprise at least one opening (18), the or at least one of the openings being preferably formed in a recess of said panel (10) with respect to its trim face.

7. The trim device according to claim 6, **characterized in that** the first fixing means of the rear shelf support (8) comprise at least one projecting piece (28), preferably provided with clipping means, intended to cooperate by insertion with the fixing means (18) of the trim element.

8. The trim device according to one of claims 1 to 7, **characterized in that** the rear shelf support (8) is made predominantly from injected plastic and, preferably, its first fixing means (28) are in one piece with said support.

9. The trim device according to one of claims 1 to 8, **characterized in that** the trim panel (10) comprises an air grid (20) and/or an access hatch (20), situated beneath the fixing means (18) of said panel (10).

10. A motor vehicle comprising:
a rear bench seat (2);
a rear luggage compartment delimited at the front by the bench seat and laterally by the lateral body (12) of the vehicle;
a lateral trim device of the luggage compartment;
**characterized in that**
the trim device is in accordance with one of claims 1 to 9.
